# EUROPÄISCHE PATENTSCHRIFT

(11) **EP 2 792 830 B1**
(45) Veröffentlichungstag und Bekanntmachung des Hinweises auf die Patenterteilung: **20.03.2019**
(21) Anmeldenummer: 14161492.5
(22) Anmeldetag: 25.03.2014
(51) Int. Cl.: E05C 9/00, E05D 5/02, F16B 37/04, E05B 9/08, E05D 15/52

(54) **BESCHLAGTEIL MIT HALTEELEMENT ZUR HALTERUNG DES BESCHLAGTEILS**
FITTING ELEMENT MIT RETAINING ELEMENT FOR HOLDING SAID FITTING ELEMENT
PARTIE DE FERRURE AVEC ÉLÉMENT DE MAINTIEN

(30) Priorität: 16.04.2013 DE 102013206827
(43) Veröffentlichungstag der Anmeldung: 22.10.2014
(73) Patentinhaber: Aug. Winkhaus GmbH & Co. KG, 48291 Telgte (DE)
(72) Erfinder: Schewe, Florian, 48369 Saerbeck (DE); Bernsmann, Wolfgang, 48291 Telgte (DE); Kaup, Ludger, 48165 Münster (DE)

(56) Entgegenhaltungen:
- EP-A1- 2 246 577
- EP-A2- 2 159 356
- DE-U1- 29 621 873
- FR-A1- 2 835 023

## Beschreibung

Die Erfindung betrifft ein Beschlagteil für ein Fensters, einer Tür oder dergleichen mit einem Halteelement zur Halterung des Beschlagteils an einer einen Hinterschnitt aufweisenden Profilnut, bestehend aus einem Klemmstück, einer Schraube und einem Federelement, wobei die Schraube mit ihrem Kopf an einer Deckschiene des Beschlagteils gehalten wird und ein Schaft der Schraube die Deckschiene durchsetzt und an seinem freien Ende mit dem Klemmstück verschraubt ist, welches durch eine zumindest anfänglich schwergängige Gewindeverbindung begrenzt mit der Schraube mitdrehbar ist und in einer Ausgangs-Drehlage schmaler und in einer quer dazu gerichteten End-Drehlage breiter ausgebildet ist als eine lichte Öffnungsbreite zwischen den zur Nutmitte weisenden Schultern der Profilnut, wobei ein als Druckfeder ausgebildetes Federelement zwischen der Deckschiene und dem Klemmstück angeordnet ist und den Schaft umschließt, wobei das Federelement aus zumindest einer Blattfeder mit einem weitgehend ebenen Grundteil und von diesem an zwei gegenüberliegenden Seiten in Richtung zur Deckschiene abgewinkelten Enden besteht und die Blattfeder einen Anschlag für das Klemmstück in Ausgangs-Drehlage aufweist. Dies ist aus der EP 2 159 356 A2 bekannt.

Bei der DE 30 16 398 A1 handelt es sich um einen Treibstangenbeschlag für Fenster oder Türen mit einer in einer längsoffenen Nut des Rahmens angeordneten Baueinheit, die mit einer die Nutöffnung verschließenden Deckschiene und an den Seitenwänden der Nut angreifenden Klemmstücken ausgestattet ist und durch Schrauben in der Nut festsetzbar ist, die mit ihren Schraubenköpfen in Öffnungen der Deckschiene stecken. Das Klemmstück sitzt am nutseitigen Ende der Schraube und zwischen der Deckschiene und dem Klemmstück wirkt eine Druckfeder, die den Schraubenschaft umschließt und das Klemmstück in einer Ausgangslage-Drehlage von der Deckschiene entfernt halten soll. Durch eine zumindest anfänglich schwergängige Gewindeverbindung ist das Klemmstück begrenzt mit der Schraube mitdrehbar und weist einen Umriss mit Schmal- und Breitseiten auf, der gegenüber der lichten Weite der Nut in der Ausgangs-Drehlage schmaler ist und in einer dazu quer gerichteten End-Drehlage breiter ausgebildet ist. Das Klemmstück ist in seiner End-Drehlage beim Weiterdrehen der Schraube längs des Schraubenschaftes entgegen der Kraft der Druckfeder gegen die vorspringenden Schultern im Nutinneren verschraubbar. Durch den stetig steigenden Gegendruck der Druckfeder beim Verschrauben des Klemmstücks gegen vorspringende Schultern im Nutinneren ist eine sichere Befestigung nicht gewährleistet. Es ist möglich, dass das Klemmstück noch nicht an den vorspringenden Schultern im Nutinneren anliegt, obwohl bereits ein sehr hohes Anzugsmoment an der Schraube aufgebracht wurde. Dies ist nicht nur bei dem Verschrauben von Hand, sondern auch bei der Verwendung von motorisch angetriebenen Schraubeinrichtungen möglich, da hierbei in der Regel das maximale Anzugsmoment, zur Vermeidung von Beschädigungen, begrenzt ist. Die äußerste Breite des Umrisses des Klemmstücks muss breiter sein als die Breite im Nutinneren, damit das Klemmstück in seiner End-Drehlage von den Seitenwandungen im Nutinneren in dieser Lage gehalten wird. Damit ist dieses Befestigungssystem nicht unabhängig von der Nutbreite im Nutinneren. Da die Druckfeder den Schraubenschaft sehr eng umschließt und in der Ausgangs-Drehlage des Klemmstücks nur wenig Druckkraft aufbringen kann, ist eine sichere Positionierung des Klemmstücks in der Ausgangs-Drehlage für den Transport nicht gewährleistet. Die Ausgangs-Drehlage des Klemmstücks ist aber für das Einsetzen in die längsoffene Nut des Rahmens besonders wichtig.

Aus der DE 296 21 873 U1 ist ein Montagesystem bekannt geworden, bei dem ein Bauteil mittels einer Scheibe und einem Gegenstück versehen wird. Abgekantete Schenkelabschnitte einer C-förmigen Halteschiene werden zwischen der Scheibe und dem Gegenstück eingespannt. Ein Federelement mit abgebogenen federnden Abschnitten hält die Scheibe von dem Gegenstück auf Abstand. Das Federelement dreht sich mit dem Gegenstück. Nachteilig bei diesem Montagesystem ist, dass sich das Gegenstück quer zur C-förmigen bewegbar ist, so dass eine genaue Ausrichtung des Bauteils in der Halteschiene nicht möglich ist.

Die FR 2 835 023 A1 offenbart eine Befestigung eines Bauteils in einer Nut. Hierzu ist ein Bauteil an einem elastischen Federblech befestigt. Das Federblech stützt sich an Wandungen der Nut ab.

Die EP 2 246 577 A1 offenbart ein Befestigungselement zur Befestigung von Bauteilen in einem Montageschlitz einer Montageschiene. Ein Hammerkopfelement hintergreift Seitenflanken eines Montageschlitzes. Ein Federelement stützt eine Schraube von dem Hammerkopfelement ab.

Der Erfindung liegt das Problem zugrunde, ein Halteelement der eingangs genannten Art so weiterzubilden, dass das Klemmstück prozesssicher in die längsoffene Nut des Rahmens montiert und mit wenig Kraftaufwand gegen die vorspringenden Schultern im Nutinneren bewegt werden kann.

Dieses Problem wird erfindungsgemäß dadurch gelöst, dass die abgewinkelten Enden in der Breite der lichten Öffnungsbreite zwischen den zur Nutmitte weisenden Schultern der Profilnut entsprechen, so dass im montierten Zustand ein verdrehen des Federelementes in der Profilnut verhindert ist.

Durch die Gestaltung mit einem weitgehend ebenen Grundteil und von diesem an zwei gegenüberliegenden Seiten in Richtung zur Deckschiene abgewinkelten Enden ergeben sich größere Abstände von dem Schaft der Schraube als Drehachse zu den Haltepunkten des Federelementes an der Deckschiene und damit eine bessere Verdrehsicherung des Klemmstücks. Auch das sich auf dem Klemmstück abstützende, weitgehend ebene Grundteil der Blattfeder weist durch die große verspannte Fläche deutlich mehr Haltekräfte gegen Verdrehen auf. Das Grundteil der Blattfeder und/oder das Klemmstück kann auch zusätzlich eine raue Oberfläche zur besseren Verdrehsicherung aufweisen. Somit kann das Klemmstück bis zur Montage in die längsoffene Nut des Rahmens sicher in der Ausgangs-Drehlage gehalten werden und ermöglicht somit ein einfaches und prozesssicheres Einsetzen in die längsoffene Nut des Rahmens.

Da die abgewinkelten Enden in der Breite der lichten Öffnungsbreite zwischen den zur Nutmitte weisenden Schultern der Profilnut entsprechen, verhindern sie im montierten Zustand ein Verdrehen des Federelementes in der Nut des Rahmens und sorgen durch die große Fläche für eine große Haltekraft. Wenn das Klemmstück gegen die vorspringenden Schultern im Nutinneren bewegt wird, verschieben und verflachen sich die abgewinkelten Enden gegenüber dem Grundteil. Dieser Effekt führt zu einer Reduzierung der durch die Blattfeder aufgebrachten Druckkraft und damit zu einer Reduzierung des an der Schraube benötigten Anzugsmomentes.

Zur weiteren Verbesserung der Erfindung trägt es bei, dass die Blattfeder an einem Ende einer Längskante des Grundteils den Anschlag für das Klemmstück in Ausgangs-Drehlage aufweist. Dadurch wird das Klemmstück noch besser gegen Verdrehen in der Ausgangs-Drehlage gesichert und das Halteelement kann durch das Drehen der Schraube entgegen der Anzugsrichtung wieder gelöst werden, da das Klemmstück nur bis zur Ausgangs-Drehlage zurück schwenken kann und in dieser Position durch den Anschlag gehalten wird. Bei der weiteren Bewegung der Schraube wird diese aus dem Klemmstück gedreht und der Abstand zwischen der Deckschiene und dem Klemmstück wird durch die Blattfeder wieder vergrößert. Dadurch kann das Halteelement wieder verwendet werden.

Besonders vorteilhaft ist es, wenn der Anschlag eine solche Breite aufweist, dass er auch als Anschlag für das Klemmstück in End-Drehlage dient. Der Anschlag weist somit zwei Anschlagfunktionen auf. Dies führt zu einer Kostenreduzierung am Bauteil. Die Sicherung der Position des Klemmstücks in der End-Drehlage macht das Halteelement unabhängig von der Nutinnenbreite und lässt daher den Einsatz in unterschiedlichen Profilnuten zu.

Nach einer Weiterbildung der Erfindung ist vorgesehen, dass ein zweiter Anschlag dem ersten Anschlag an dem Grundteil diametral gegenüber liegt, um auch sehr hohe Anschlagkräfte sowohl beim Einschwenken des Klemmstücks in die Ausgangs-Drehlage als auch in die End-Drehlage sicher aufzunehmen und damit eine hohe Prozesssicherheit herzustellen.

Vorteilhaft ist es, wenn die Länge des Grundteils zwischen den abgewinkelten Enden in etwa der breiten Seite des Klemmstücks entspricht. Dadurch haben die abgewinkelten Enden einen großen Abstand vom Schaft, was das Haltemoment erhöht. Besonders wichtig ist der Effekt, dass das Grundteil in der Ausgangs-Drehlage des Klemmstücks von diesem über die ganze Fläche abgestützt wird und somit kaum Verformungen am Grundteil auftreten können und damit das Halteteil sicher gehalten wird. Wenn aber das Klemmstück in die End-Drehlage gedreht wird, wird das Grundteil nur noch an einem kleineren Teil der Fläche abgestützt. Zu dem Verschieben und Verflachen der abgewinkelten Enden gegenüber der Deckschiene ist nun auch eine einfachere Verformung in den nicht vom Klemmstück abgedeckten Bereichen des Grundteils möglich, was zu einer Verringerung des an der Schraube benötigten Anzugsmomentes beim Verschrauben des Klemmstücks in Richtung der vorspringenden Schultern im Nutinneren führt.

Eine Weiterbildung der Erfindung sieht vor, dass die Breite des Grundteils annähernd der lichten Öffnungsbreite zwischen den zur Nutmitte weisenden Schultern der Profilnut entspricht. Dadurch erhält das Grundteil eine sehr hohe Stabilität und eine große Auflagefläche auf dem Klemmstück. Dies trägt außerdem zu einer Erhöhung der Haltekräfte gegen Verdrehen bei.

Es ist vorteilhaft, wenn die abgewinkelten Enden von dem Grundteil um etwa 45° abgewinkelt sind. Dadurch werden zunächst in Ausgangs-Drehlage die benötigten hohen Haltekräfte durch die abgewinkelten Enden übertragen. Beim Verschrauben des Klemmstücks in Richtung der vorspringenden Schultern im Nutinneren können sich die abgewinkelten Enden gegenüber der Deckschiene verschieben und verflachen. Dies führt zu einer weiteren Reduzierung der durch die Blattfeder aufgebrachten Druckkraft und damit zu einer Verringerung des an der Schraube benötigten Anzugsmomentes.

Es ist besonders vorteilhaft, wenn eine maximale Höhe der abgewinkelten Enden von dem Grundteil größer ist als die Materialstärke der Schultern der Profilnut. Hierdurch kann das Klemmteil einfach in die End-Drehlage verdreht werden, es wird ein Druck zwischen dem Klemmstück und der Deckschiene erzeugt und es werden Toleranzen der Materialstärke der Schultern der Profilnut ausgeglichen.

Schließlich ist es vorteilhaft, wenn die der Deckschiene zugewandten Kanten der abgewinkelten Enden scharfkantig ausgeführt sind. Sie können sich mit der scharfen Kante besser an der Deckschiene abstützen, was ein Verschieben der abgewinkelten Enden erschwert und damit ebenfalls zu einer Erhöhung der Haltekraft des Halteelements beiträgt.

Um ein Verschieben des Beschlagteils in Längsrichtung der Profilnut sicher zu vermeiden, ist es vorteilhaft, wenn sich das freie Ende des Schaftes bei an den Schultern anliegendem Klemmstück an dem Boden der Profilnut abstützt.

Das freie Ende des Schaftes kann dafür auch spitz zulaufend ausgeführt sein.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigt in
- Fig. 1: eine Fensterprofilecke mit einem eine Ausführungsform der Erfindung darstellenden Beschlagteil und dem Halteelement
- Fig. 2: einen Ausschnitt aus einer Schnittdarstellung im Bereich des Halteelements des Fensterprofils aus Fig. 1
- Fig. 3: das Halteelement in Ausgangs-Drehlage
- Fig. 4: das Halteelement in End-Drehlage
- Fig. 5: das Halteelement in Ausgangs-Drehlage an einer Deckschiene
- Fig. 6: das Halteelement in End-Drehlage an einer Deckschiene
- Fig. 7: das Halteelement in Ausgangs-Drehlage an einer Deckschiene aus Fig. 5 von unten
- Fig. 8: das Halteelement in End-Drehlage an der Deckschiene aus Fig. 6 von unten

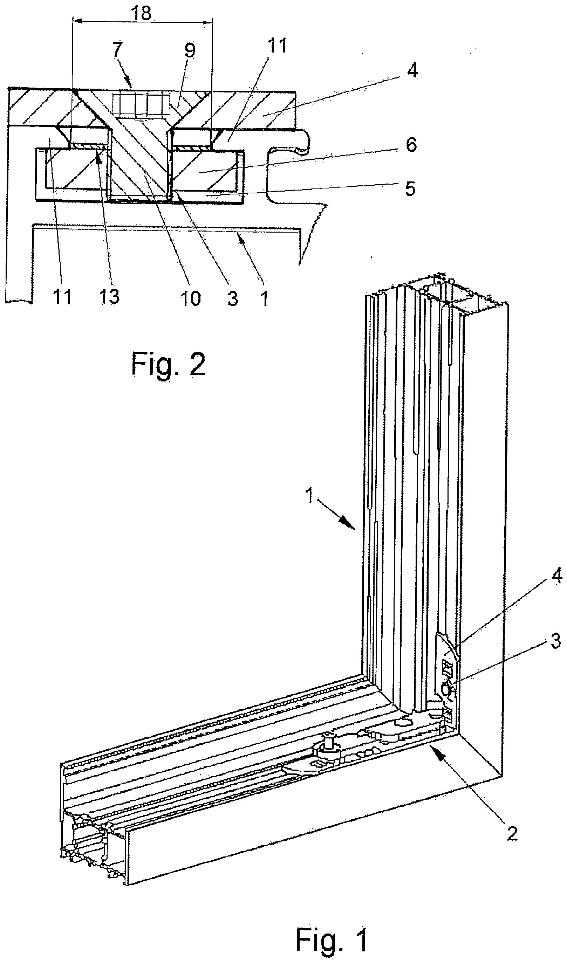

Figur 1 zeigt ein Fensterprofil (1) in Form einer Ecke mit einem Beschlagteil (2) und dem Halteelement (3). Das Beschlagteil (2) weist eine Deckschiene (4) auf. Exemplarisch ist ein Ecklager dargestellt, welches an dem Fensterprofil (1) befestigt ist. Es können aber auch alle weiteren Beschlagteile, wie z.B. Getriebeschienen, Oberschienen, Mittenverriegelungen und Schließbleche mit dem Halteelement (3) an dem Fensterprofil (1) befestigt werden.

Die Figur 2 zeigt einen Ausschnitt aus einer Schnittdarstellung im Bereich des Halteelements (3) des Fensterprofils (1) aus Fig. 1. Die Deckschiene (4) liegt auf dem Fensterprofil (1) auf und überdeckt eine einen Hinterschnitt aufweisende Profilnut (5). Der Hinterschnitt wird durch zwei zur Nutmitte weisende Schultern (11) gebildet. Das Klemmstück (6) des Halteelementes (3) befindet sich in der End-Drehlage, in der es die zwei zur Nutmitte weisenden Schultern (11) hintergreift. Die Deckschiene (4) und das Klemmstück (6) sind durch eine Schraube (7) verbunden, die einen Kopf (9) und einen Schaft (10) aufweist. Zwischen dem Klemmstück (6) und der Deckschiene (4) wird eine Blattfeder (13) von der Schraube gespannt. Die Blattfeder (13) weist annähernd die Breite der lichten Öffnungsbreite (18) zwischen den zur Nutmitte weisenden Schultern (11) der Profilnut (5) auf. Das freie Ende des Schaftes (10) stützt sich an dem Boden der Profilnut (5) ab.

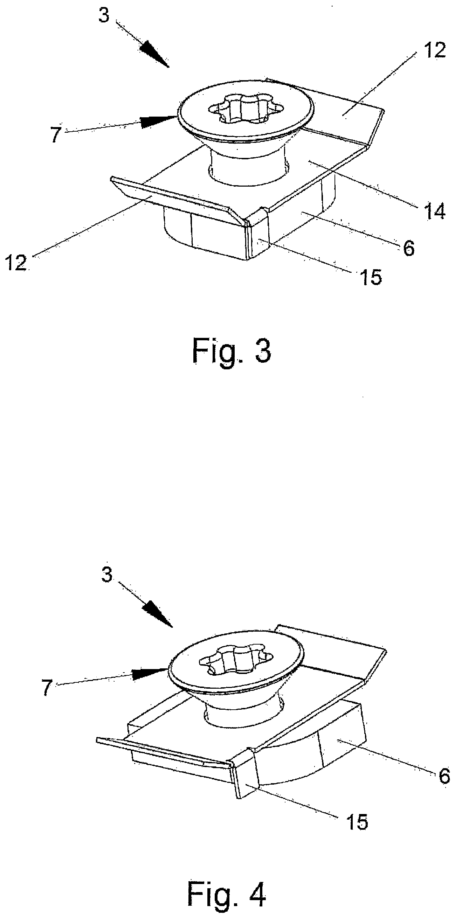

Figur 3 zeigt das Halteelement (3) ohne das Fensterprofil (1) und ohne die Deckschiene (4) in einer perspektivischen Darstellung, wobei sich das Klemmstück (6) in der Ausgangs-Drehlage befindet. Das Klemmstück (6) wird von der Blattfeder (13) überdeckt, die aus einem weitgehend ebenen Grundteil (14) und zwei abgewinkelten Enden (12) besteht. An einem Ende einer Längskante weist das Grundteil (14) einen Anschlag (15) für das Klemmstück (6) auf. Der Anschlag (15) ist einstückig mit dem Grundteil (14) ausgeführt und von diesem um etwa 90° abgewinkelt. Das Klemmstück (6) liegt an einer langen Seite des Anschlags (15) an. Das Grundteil (14) überdeckt das Klemmstück (6) vollständig.

Figur 4 zeigt das Halteelement (3) ohne das Fensterprofil (1) und ohne die Deckschiene (4) wie in Fig. 3, wobei sich das Klemmstück (6) durch eine 90°-Drehung nun in der End-Drehlage befindet. Wie in Fig. 2 dargestellt, hintergreift das Klemmstück (6) in dieser Lage die nun nicht dargestellten zwei zur Nutmitte weisenden Schultern (11) der Profilnut (5). Es ist gut zu erkennen, dass das Klemmstück (6) beide Seiten des Grundteils (14) der Blattfeder (13) überragt. Dadurch werden in dieser Stellung des Klemmstücks (6) im Gegensatz zu der Ausgangs-Drehlage des Klemmstücks (6) aus Fig. 3 Teile des Grundteils (14) nicht vom Klemmstück (6) gestützt. Diese Teile des Grundteils (14) können nun ebenfalls wie die zwei abgewinkelten Enden (12) dem Druck zwischen der Deckschiene (4) und dem Klemmstück (6) federelastisch nachgeben und verringern dadurch das aufzubringende Anzugsmoment an der Schraube (7) beim Anziehen des Klemmstücks (6) gegen die zwei zur Nutmitte weisenden Schultern (11) der Profilnut (5).

Der Anschlag (15) begrenzt auch diese Lage des Klemmstücks (6), wobei das Klemmstück (6) nun an einer schmalen Seite des Anschlags (15) anliegt.

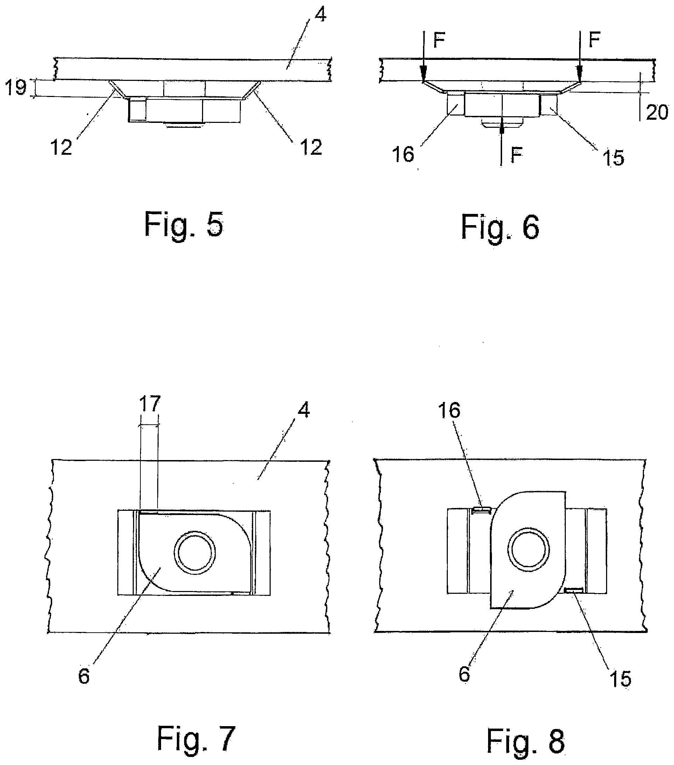

Die Figuren 5 und 7 zeigen das Halteelement (3) aus Fig. 3 mit einer Deckschiene (4) jeweils aus einer anderen Ansicht. In Fig. 5 ist die maximale Höhe (19) der zwei abgewinkelten Enden (12) von dem Grundteil (14) der Blattfeder (13) zu sehen. Die maximale Höhe (19) weist in der dargestellten Ausgangs-Drehlage ein Maß auf, bei dem der Federdruck so bemessen ist, das sich das Klemmstück (6) in der Profilnut (5) verdrehen lässt, die Blattfeder (13) aber über die abgewinkelten Enden (12) hohe Haltekräfte übertragen kann. Fig. 7 zeigt einen zweiten Anschlag (16), der dem ersten Anschlag (15) an dem Grundteil (14) diametral gegenüber liegt aus einer Ansicht von der Unterseite der Deckschiene (4) und des Klemmstücks (6). Weiterhin ist der Umriss mit den Schmal- und den Breitseiten des Klemmstücks (6) und das freie Ende des Schaftes (10) der Schraube (7) zu sehen, welches mittig aus dem Klemmstück (6) herausragt.

Die Figuren 6 und 8 zeigen das Halteelement (3) aus Fig. 4 mit einer Deckschiene (4) jeweils in einer anderen Ansicht. In Fig. 6 ist die minimale Höhe (20) der zwei abgewinkelten Enden (12) von dem Grundteil (14) der Blattfeder (13) zu sehen. Sie entsteht durch die auf die Blattfeder (13) eingeleiteten Druckkräfte (F) bei dem Anschrauben des Klemmstücks (6) gegen die zwei hier nicht dargestellten zur Nutmitte weisenden Schultern (11) der Profilnut (5). Die auch schon in der Anfangs-Drehlage in Fig. 5 vorhandenen Druckkräfte auf die Blattfeder (13) werden dadurch erhöht. Durch das Stauchen in den zwei abgewinkelten Enden (12) und zusätzlich in den das Klemmstück (6) überragenden Bereichen des Grundteils (14) in der End-Drehlage des Klemmstücks (6) werden die Druckkräfte (F) von der Blattfeder (13) sehr gut abgebaut, so dass sich bei dem Anschrauben des Klemmstücks (6) gegen die zwei zur Nutmitte weisenden Schultern (11) der Profilnut (5) das aufzubringende Anzugsmoment an der Schraube (7) kaum verändert.

Die Verformungen haben unter anderem dazu geführt, dass sich die zwei abgewinkelten Enden (12) gegenüber dem Grundteil (14) verflacht haben. Die Blattfeder (13) weist eine größere Breite als in Fig. 5 auf. Aus der Fig. 8 ist ersichtlich, dass die beiden Anschläge 15 und 16 eine solche Breite 17 aufweisen, dass das Klemmstück (6) in dieser Lage ebenfalls an den Anschlägen (15, 16) anliegt, allerdings nun an dessen Schmalseiten.

## Patentansprüche

1. Beschlagteil (2) für ein Fensters, eine Tür oder dergleichen mit einem Halteelement (3) zur Halterung des Beschlagteils (2) an einer einen Hinterschnitt aufweisenden Profilnut (5), bestehend aus einem Klemmstück (6), einer Schraube (7) und einem Federelement (8), wobei die Schraube (7) mit ihrem Kopf (9) an einer Deckschiene (4) des Beschlagteils (2) gehalten wird und ein Schaft (10) der Schraube (7) die Deckschiene (4) durchsetzt und an seinem freien Ende mit dem Klemmstück (6) verschraubt ist, welches durch eine zumindest anfänglich schwergängige Gewindeverbindung begrenzt mit der Schraube (7) drehbar ist und in einer Ausgangs-Drehlage schmaler und in einer quer dazu gerichteten End-Drehlage breiter ausgebildet ist, als eine lichte Öffnungsbreite zwischen den zur Nutmitte weisenden Schultern (11) der Profilnut (5), wobei das als Druckfeder ausgebildete Federelement (8) zwischen der Deckschiene (4) und dem Klemmstück (6) angeordnet ist und den Schaft (10) umschließt, wobei das Federelement (8) aus zumindest einer Blattfeder (13) mit einem weitgehend ebenen Grundteil (14) und von diesem an zwei gegenüberliegenden Seiten in Richtung zur Deckschiene (4) abgewinkelten Enden (12) besteht, wobei die Blattfeder (13) einen Anschlag (15) für das Klemmstück (6) in Ausgangs-Drehlage aufweist, **dadurch gekennzeichnet, dass** die abgewinkelten Enden (12) in der Breite der lichten Öffnungsbreite zwischen den zur Nutmitte weisenden Schultern (11) der Profilnut (5) entsprechen, so dass im montierten Zustand ein Verdrehen des Federelementes (8) in der Profilnut (5) verhindert ist, und dass die Blattfeder den Anschlag (15) an einer Außenkante des Grundteils (14), nahe einem abgewinkelten Ende (12) aufweist.

2. Beschlagteil (2) (4) nach Anspruch 1, **dadurch gekennzeichnet, dass** der Anschlag (15) eine solche Breite (17) aufweist, dass er auch als Anschlag (15) für das Klemmstück (6) in End-Drehlage dient.

3. Beschlagteil (2) nach Anspruch 1 oder 2, **dadurch gekennzeichnet, dass** ein zweiter Anschlag (16) dem ersten Anschlag (15) an dem Grundteil (14) diametral gegenüber liegt.

4. Beschlagteil (2) nach einem der vorhergehenden Ansprüche, **dadurch gekennzeichnet, dass** die Länge des Grundteils (14) zwischen den abgewinkelten Enden (12) in etwa der breiten Seite des Klemmstücks (6) entspricht.

5. Beschlagteil (2) nach einem der vorhergehenden Ansprüche, **dadurch gekennzeichnet, dass** die Breite des Grundteils (14) annähernd der lichten Öffnungsbreite (18) zwischen den zur Nutmitte weisenden Schultern (11) der Profilnut (5) entspricht.

6. Beschlagteil (2) nach einem der vorhergehenden Ansprüche, **dadurch gekennzeichnet, dass** die abgewinkelten Enden (12) von dem Grundteil (14) um etwa 45° abgewinkelt sind.

7. Beschlagteil (2) nach einem der vorhergehenden Ansprüche, **dadurch gekennzeichnet, dass** eine maximale Höhe (19) der abgewinkelten Enden (12) von dem Grundteil (14) größer ist als die Materialstärke der Schultern (11) der Profilnut (5).

8. Beschlagteil (2) nach einem der vorhergehenden Ansprüche, **dadurch gekennzeichnet, dass** die der Deckschiene (4) zugewandten Kanten der abgewinkelten Enden (12) scharfkantig ausgeführt sind.

9. Beschlagteil (2) nach einem der vorhergehenden Ansprüche, **dadurch gekennzeichnet, dass** sich das freie Ende des Schaftes (10) bei an den Schultern (11) anliegendem Klemmstück (6) an dem Boden der Profilnut (5) abstützt.

## Claims

1. A fitting part (2) for a window, a door or the like with a holding element (3) for holding the fitting part (2) at a profile groove (5) having an undercut, consisting of a clamping piece (6), a screw (7) and a spring element (8), wherein the screw (7) with its head (9) is held on a cover rail (4) of the fitting part (2) and a shank (10) of the screw (7) passes through the cover rail (4) and on its free end is screwed to the clamping piece (6), which limited by an at least initially sluggish threaded connection is rotatable with the screw (7) and is designed narrower in an initial rotational position and wider in a final rotational position directed transversely thereto, than a clear opening width between the shoulders (11) of the profile groove (5) pointing towards the center of the groove, wherein the spring element (8) designed as a compression spring is arranged between the cover rail (4) and the clamping piece (6) and surrounds the shank (10), wherein the spring element (8) consists of at least one leaf spring (13) with a largely planar base part (14) and ends (12) angled away from said base part on two opposite sides in the direction towards the cover rail (4),
wherein the leaf spring (13) has a stop (15) for the clamping piece (6) in the initial rotational position, **characterized in that** the angled ends (12) correspond in width to the clear opening width between the shoulders (11) of the profile groove (5) pointing toward the center of the groove, so that in the mounted state a rotation of the spring element (8) is prevented in the profile groove (5) and that the leaf spring has the stop (15) on an outer edge of the base part (14), close to an angled end (12).

2. A fitting part (2) according to Claim 1, **characterized in that** the stop (15) has a width (17) such that it also serves as a stop (15) for the clamping piece (6) in the final rotational position.

3. A fitting part (2) according to Claim 1 or 2, **characterized in that** a second stop (16) is diametrically opposed to the first stop (15) on the base part (14).

4. A fitting part (2) according to any one of the preceding claims, **characterized in that** the length of the base part (14) between the angled ends (12) corresponds approximately to the wide side of the clamping piece (6).

5. A fitting part (2) according to any one of the preceding claims, **characterized in that** the width of the base part (14) corresponds approximately to the clear opening width (18) between the shoulders (11) of the profile groove (5) pointing towards the center of the groove.

6. A fitting part (2) according to any one of the preceding claims, **characterized in that** the angled ends (12) are angled away from the base part (14) by approximately 45°.

7. A fitting part (2) according to any one of the preceding claims, **characterized in that** a maximum height (19) of the angled ends (12) from the base part (14) is greater than the material thickness of the shoulders (11) of the profile groove (5).

8. A fitting part (2) according to any one of the preceding claims, **characterized in that** the edges of the angled ends (12) facing the cover rail (4) are designed with sharp edges.

9. A fitting part (2) according to any one of the preceding claims, **characterized in that** the free end of the shank (10) is supported at the bottom of the profile groove (5) when the clamping piece (6) abuts against the shoulders (11).

## Revendications

1. Partie de ferrure (2) pour une fenêtre, une porte ou similaire, avec un élément de retenue (3) pour la retenue de la partie de ferrure (2) sur une rainure de profilé (5) comportant une contre-dépouille, composée d'une pièce de serrage (6), d'une vis (7) et d'un élément de ressort (8), la vis (7) étant, avec sa tête (9), retenue sur un rail de recouvrement (4) de la partie de ferrure (2), et une tige (10) de la vis (7) pénétrant dans le rail de recouvrement (4) et étant, à son extrémité libre, assemblée par vissage à la pièce de serrage (6) qui peut tourner avec la vis (7) de façon limitée par un raccordement fileté qui est, au moins initialement, difficile à actionner et qui est constituée de façon plus étroite dans une position de rotation initiale et de façon plus large dans une position de rotation finale qui est transversale à la position précédente qu'une largeur d'ouverture libre entre les épaulements (11) de la rainure de profilé (5) dirigés vers le milieu de rainure, l'élément de ressort (8) constitué en tant que ressort de pression étant disposé entre le rail de recouvrement (4) et la pièce de serrage (6), et entourant la tige (10), l'élément de ressort (8) se composant d'au moins un ressort à lame (13) avec une partie de base (14) largement plane et d'extrémités (12) coudées à partir de celle-ci sur deux côtés opposés en direction du rail de recouvrement (4), le ressort à lame (13) comportant une butée (15) pour la pièce de serrage (6) dans la position de rotation initiale, **caractérisée en ce que** les extrémités (12) coudées correspondent en largeur à la largeur d'ouverture libre entre les épaulements (11) de la rainure de profilé (5) dirigés vers le milieu de rainure de telle sorte que, dans l'état monté, une torsion de l'élément de ressort (8) dans la rainure de profilé (5) est empêchée, et **en ce que** le ressort à lame comporte la butée (15) sur une arête extérieure de la partie de base (14) près d'une extrémité (12) coudée.

2. Partie de ferrure (2) selon la revendication 1, **caractérisée en ce que** la butée (15) présente une largeur (17) telle qu'elle sert également de butée (15) pour la pièce de serrage (6) dans la position de rotation finale.

3. Partie de ferrure (2) selon la revendication 1 ou 2, **caractérisée en ce qu'**une deuxième butée (16) est située de façon diamétralement opposée à la première butée (15) sur la partie de base (14).

4. Partie de ferrure (2) selon l'une des revendications précédentes, **caractérisée en ce que** la longueur de la partie de base (14) entre les extrémités (12) coudées correspond à peu près au côté large de la pièce de serrage (6).

5. Partie de ferrure (2) selon l'une des revendications précédentes, **caractérisée en ce que** la largeur de la partie de base (14) correspond approximativement à la largeur d'ouverture libre (18) entre les épaulements (11) de la rainure de profilé (5) dirigés vers le milieu de rainure.

6. Partie de ferrure (2) selon l'une des revendications précédentes, **caractérisée en ce que** les extrémités (12) coudées sont coudées d'environ 45° par rapport à la partie de base (14).

7. Partie de ferrure (2) selon l'une des revendications précédentes, **caractérisée en ce qu'**une hauteur maximale (19) des extrémités (12) coudées à partir de la partie de base (14) est plus grande que l'épaisseur de matériau des épaulements (11) de la rainure de profilé (5).

8. Partie de ferrure (2) selon l'une des revendications précédentes, **caractérisée en ce que** les arêtes des extrémités (12) coudées tournées vers le rail de recouvrement (4) sont réalisées à vives arêtes.

9. Partie de ferrure (2) selon l'une des revendications précédentes, **caractérisée en ce que** l'extrémité libre de la tige (10), en ce qui concerne la pièce de serrage (6) adjacente aux épaulements (11), s'appuie sur le fond de la rainure de profilé (5).
